# EUROPEAN PATENT SPECIFICATION

(11) **EP 1 491 245 B1**
(45) Date of publication and mention of the grant of the patent: **06.08.2008**
(21) Application number: 03712717.2
(22) Date of filing: 17.03.2003
(51) Int. Cl.: B01D 11/02, C08J 11/08

(54) **EXTRACTOR**
EXTRAKTIONSVORRICHTUNG
EXTRACTEUR

(30) Priority: 20.03.2002 JP 2002078361; 20.03.2002 JP 2002078362; 30.09.2002 JP 2002286747; 01.11.2002 JP 2002320377
(43) Date of publication of application: 29.12.2004
(73) Proprietor: MATSUSHITA ELECTRIC INDUSTRIAL CO., LTD., Kadoma-shi, Osaka 571-8501 (JP)
(72) Inventor: KAWAKAMI, Tetsuji, Katano-shi, Osaka 576-0015 (JP); TERADA, Takahiko, Soraku-gun, Kyoto 619-0232 (JP); ONISHI, Hiroshi, Hirakata-shi, Osaka 573-1125 (JP); NAKAJIMA, Keizo, Kawachinagano-shi, Osaka 586-0077 (JP); IRIE, Shoichi, Toyonaka-shi, Osaka 561-0881 (JP)
(74) Representative: Grünecker, Kinkeldey, Stockmair & Schwanhäusser Anwaltssozietät
(86) International application number: PCT/JP2003/003144
(87) International publication number: WO 2003/078016

(56) References cited:
- EP-A- 1 149 860
- JP-A- 2001 019 792
- US-A- 3 529 938
- US-A- 5 624 699
- US-A- 5 738 003
- US-A1- 2001 044 520
- PATENT ABSTRACTS OF JAPAN vol. 006, no. 113 (M-138), 24 June 1982 (1982-06-24) & JP 57 041932 A (TOSHIBA MACH CO LTD), 9 March 1982 (1982-03-09)

## Description

### Technological Field

The present invention relates to an extractor of extracting useful or unnecessary components with an extraction agent from a solid raw material such as resins, animal and plant materials and the like. The invention in particular relates to an extractor according to the preamble of claim 1.

### Background Art

As an apparatus of extracting partial components from liquid, there are reciprocal rotating type extraction columns of effecting contact-extraction while shaking another liquid manifesting no miscibility in countercurrent, and the like. Further, as an apparatus of extracting components of low molecular weight from solid, there are a Soxhlet extractor and the like.

On the other hand, as an extractor having a mechanism in the form of screw, there is exemplified a continuous extractor of screw conveyor mode equipped with a screw conveying extraction materials into a vessel reserving a water solvent and the like.

Such examples are found in, for instance, Japanese Patent Application Laid-Open (JP-A) Nos. 10-99021 (Fig. 1), 11-266786 (page 1, Fig. 1), 2000-254406 (page 1, Fig. 1) and the like.

Further, as a method of separating a substance mixture composed of a plurality of components containing a thermoplastic polymer as the main component and a compound of low molecular weight as a by-product component to be separated using an extruder, countercurrent flow extraction and parallel flow extraction are exemplified.

Such examples are found in, for instance, Japanese Patent Application Laid-Open (JP-A) No. 7-149818 (Figs. 1 to 5) and the like.

On the other hand, as a technology of removing volatile components (volatile component removal) from a material using a twin-axis extruder, twin-axis dehydration extruders applied to water-containing plastic raw materials, and the like, are exemplified.

Such examples are found in, for instance, Japanese Patent Application Laid-Open (JP-A) Nos. 7-214553, 2001-322155, 2001-322154, 2001-219424 and 10-3473010, and the like.

These extruders utilize installation of a dammed portion for squeezing, use of a kneading disk and a seal ring, use of a kneading disk and a reverse screw block, as the dammed portion, and the like.

Further, there are exemplified that utilization of a forward-screw flight screw having a notched portion is effective for acceleration of counter-flow of liquid, and that utilization of a forward-screw flight screw having a kneading disk and a notched portion is effective for an kneading effect expected to influence on an extraction ability.

Such examples are found, for instance, in JP-A No. 2001-191385 and the like.

However, if an operation of extracting additives from a thermoplastic resin is tried to be conducted as an operation of mutual liquid extraction, it leads to dissolution of the thermoplastic resin into a solvent and contact with other solvent as an extraction agent. Since a solvent for dissolving a resin and a solvent used as an extraction agent manifest little miscibility, when the resin solution and extraction agent come into mutual contact, a phenomenon of re-precipitation and deposition of thermoplastic resin components occurs immediately. Further, since a large proportion of components of low molecular weight to be extracted are enclosed in the re-precipitating and depositing resin, efficient extraction is difficult.

For example, in a Soxhlet extractor, a solvent of high temperature is contacted with and diffused in solid to cause extraction of inner components, and when the solid is a thermoplastic resin, swelling and melting of the resin occur. Therefore, a filtration material supporting the solid is clogged, and it is impossible to successively conduct an extraction operation. In this case, even if contact is effected at higher temperature and even if a solvent inducing no swelling of a resin is used, extraction can be hardly conducted since the mutual action between the resin and solvent is small.

In a continuous extraction apparatus of screw conveyer mode, when the thermoplastic resin is a material to be extracted, the thermoplastic resin comes into contact with a solvent to cause blocking, and separation of a solvent from the thermoplastic resin is insufficient, or the like. Further, as a result of remaining of components extracted into the solvent on the side of the thermoplastic resin together with the solvent, satisfactory extraction cannot be conducted in some cases.

As an extraction method utilizing a screw extruder, there is disclosed a method of extracting a water-soluble component of low molecular weight from a thermoplastic resin with supercritical fluid such as water, carbon dioxide and the like, however, there is disclosed no examples of applying to extraction of non-water-soluble components.

Particularly, in conducting material recycle of a flame retardant resin containing a flame retardant which is required to be suitably treated in recycle treatment, it is preferable to carry out removal treatment of components not suitable for re-use, however, it is supposed that there is no method of continuously effecting such extraction removal treatment.

There are wide variety of additives , and even in one species, different materials having significantly varying natures are used in some cases. Therefore, extraction cannot be effected with one kind of extraction solvent (extraction agent) in many cases. That is, it is supposed that there is known no example utilizing a screw extraction technology for effecting extraction of components from a raw material, such as extraction of additives in a thermoplastic resin, and the like.

An extractor according to the preamble of claim 1 is known from JP 57041932. This prior art document in particular relates to an extractor for mixing of resin and an additive.

Prior art US 5,624,699 discloses a method to extract a soluble component from a food material and a counter-current extractor using a screw conveyer. It is also disclosed that an extract is heated with a recycle line and then introduced in a housing.

Prior art US 3,529,938 discloses a kneader having propeller-shaped blades for extracting a dissolving component by mixing a mixture of a chemical compound with an extract. It is also disclosed to wrap a case storing the propeller-shaped blades with a heat exchanging jacket. Moreover, a conveying direction of a mixture (a solid) and the extract is a counter-current direction.

Prior art US 5,738,003 discloses to heat an extract in the counter-current conveyor extractor using a screw conveyor and then to recycle the same in the conveyer.

### SUMMARY OF THE INVENTION

The present invention has, in view of such conventional problems mentioned above, an object of providing an extractor capable of extraction-removing additives such as, for example, flame retardants contained in waste plastics, and the like at high removal ratio (extraction ratio) by utilizing a solvent.

The above object is achieved by an extractor as defined in claim 1. Preferred embodiments thereof are defined in claims 2 to 7.

### BRIEF EXPLANATION OF DRAWINGS

Fig. 1 is a schematic general constitutional view of an extractor according to Embodiment 1, which is not in accordance of the present invention.
Fig. 2 is a schematic general constitutional view of an extractor according to Embodiment 2 of the present invention.
Fig. 3 is a schematic general constitutional view of an extractor according to an embodiment of the present invention.
Fig. 4 is a schematic general constitutional view of an extractor according to Embodiment 3 of the present invention.
Fig. 5 is a sectional view of a seal ring part of an extractor according to Embodiment 3 of the present invention.
Fig. 6 is a longitudinal sectional view of a seal ring part of an extractor according to Embodiment 3 of the present invention.
Fig. 7 is a cross-sectional schematic view of a kneading disk according to Embodiment 3 of the present invention.
Fig. 8 is a longitudinal sectional schematic view of a forward screw element 9 having notching around the periphery of screw teeth, according to an embodiment of the present invention.
Fig. 9 is a longitudinal sectional schematic view of a screw in the form having notching of a projection portion (flight part) of the screw, according to an embodiment of the present invention.
Fig. 10 is a longitudinal sectional schematic view of a screw having a section in the form of gear, according to an embodiment of the present invention.
Fig. 11 is a longitudinal sectional schematic view of a screw in the form having penetration hole in a projection portion, according to an embodiment of the present invention.
Fig. 12 is a schematic general constitutional view of an extruder, according to an embodiment of the present invention.
Fig. 13 is a schematic general constitutional view of an extruder, according to an embodiment of the present invention.
Fig. 14 is a schematic general constitutional view of an extruder, according to an embodiment of the present invention.
Fig. 15 is a longitudinal sectional schematic view showing a pressure increasing mechanism 10 portion of an extruder according to an embodiment of the present invention.
Fig. 16 is a sectional schematic view showing a barrel structure of an extruder according to an embodiment of the present invention.
Fig. 17 is a schematic general constitutional view of an extruder according to an embodiment of the present invention.
Fig. 18 is a schematic general constitutional view of an extruder according to an embodiment of the present invention.
Fig. 19 is a schematic general constitutional view of an extruder according to Embodiment 4 of the present invention.

### Description of Marks

1: raw material conveying mechanism
2: raw material feeding part
3: solid discharging port
4: extraction agent injecting part
5: extraction agent discharging part
6: kneading part
7: barrel
8: screw axis
9: forward screw element
10: pressure increasing mechanism
11: orifice
12: above and below dividing type barrel
13: vent port
14: vacuum pump
15: trap
16: extraction agent counter-flow preventing mechanism
17: heat exchange mechanism

### BEST MODES FOR CARRYING OUT THE INVENTION

Below, embodiments of the present invention will be described referring to drawings.

### (Embodiment 1)

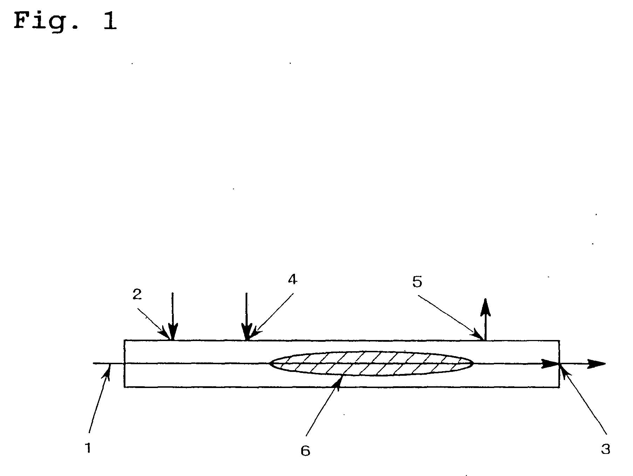

First, the constitution and movement of an extractor according to this embodiment will be described referring to Fig. 1, a schematic general constitutional view of an extractor according to Embodiment 1, which is not according to the present invention but useful in order to understand said invention. One embodiment according to the extraction method will be also described while illustrating the movement of an extractor of this embodiment (it is applied also to other embodiments).

The mixing means of the present invention corresponds to a kneading part 6, the extraction agent injecting means of the present invention corresponds to an extraction agent injecting part 4, and the extraction agent discharging means of the present invention corresponds to an extraction agent discharging part 5. The extractor of the present invention corresponds to an extraction machine of this embodiment.

The extraction machine of this embodiment has a raw material conveying mechanism 1, a raw material feeding part 2 and a solid discharging port 3, further has an extraction agent discharging part 5 and an extraction agent injecting part 4 between the raw material feeding part 2 and the solid discharging port 3, furthermore, a kneading part 6 between the extraction agent discharging part 5 and the extraction agent injecting part 4.

The positional relation of the extraction agent discharging part 5 and the extraction agent injecting part 4 may be inverted.

By feeding a raw material from the raw material feeding part 2, feeding an extraction agent from the extraction agent injecting part 4 and contact-kneading a raw material with an extraction agent, components in the raw material can be extracted.

The raw material to be extracted includes thermoplastic resins in which a various kinds of additives are in general dispensed and contained, and additionally, animal and plant tissues (thermosetting resin) containing useful components such as odors, physiologically active substances and the like.

The extraction agent is a solvent for effecting extraction from a raw material, and there is no particular restriction providing it is a solvent capable of dissolving not all of the raw material but successfully dissolving components required to be extracted.

As a subject to which the extraction method of this embodiment as described above is applied, there is a thermoplastic resin containing a flame retardant having a possibility of generating an environmental load by inappropriate treatment. By applying the extraction method of this embodiment, it is possible to extraction-remove a flame retardant and to re-use a remaining harmless thermoplastic resin.

As the flame retardant, there are mentioned halogen-based flame retardants containing elements such as bromine, chlorine and the like, phosphorus-based flame retardants , or antimony trioxide used as a flame retardant aid together with a halogen-based flame retardant, and the like.

As the thermoplastic resin, there are mentioned resins selected from the group consisting of vinyl acetate-based resins, polyoxymethylene, acrylic resins, polyamide-based resins, polyphenylene ether-based resins, polystyrene resins, ABS resins, polycarbonate resins, polyethylene terephthalate resins, polybutylene terephthalate resins, polyolefin resins.

More specifically listed are vinyl acetate-based resins composed of vinyl acetate and its (co)polymer, further, partial saponified substances thereof and the like; polyoxymethylene, acrylic resins (polyacrylates, PMMA and the like), various polyamide-based resins (nylon 6, nylon 12, 6,6-nylon and the like), polyphenylene ether-based resins, polystyrene resins, ABS resins, polycarbonate resins, polyethylene terephthalate resins, polybutylene terephthalate resins, polyolefin resins (polyethylene, polypropylene, polybutene and the like).

As suitable extraction agents capable of dissolving and extracting only additive components contained with scarcely dissolving these reins, there are mentioned solvents selected from the group consisting of ethylene glycol, propylene glycol, ethyl lactate and dipropylene glycol.

Particularly when the thermoplastic resin contains a bromine-based flame retardant as the flame retardant, it is effective to use dipropylene glycol as the extraction agent for securement of the extraction-removal ability of a flame retardant, and securement of the low ratio of an extraction agent remaining in a resin and re-usability of an extraction agent.

### (Embodiment 2)

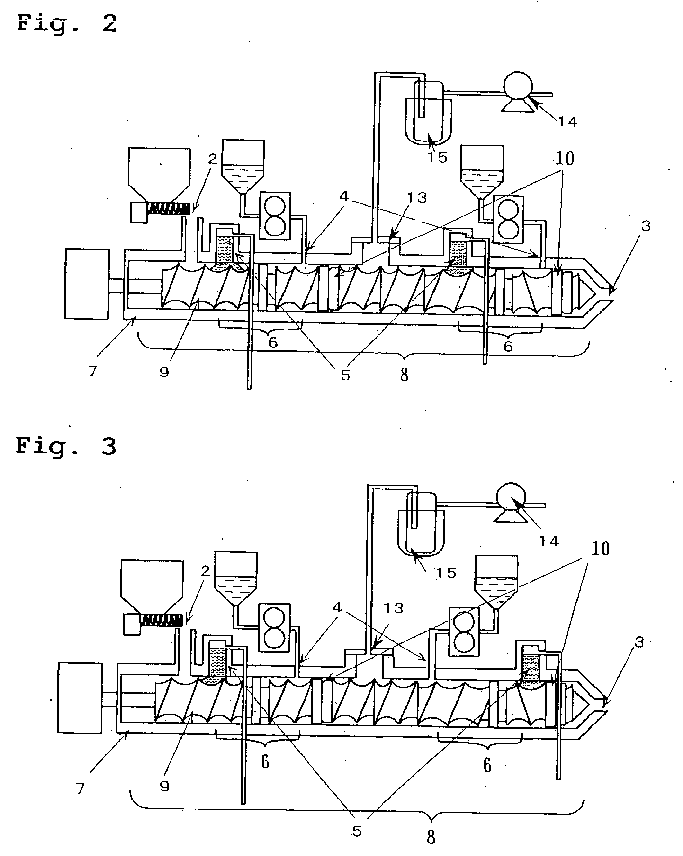

Next, the constitution and movement of an extractor according to this embodiment will be described referring mainly to Fig. 2, a schematic general constitutional view of an extractor according to Embodiment 2 of the present invention.

The counter-flow means of the present invention corresponds to a pressure increasing mechanism 10.

The extractor of this embodiment has a plurality of sets of extraction agent discharging parts 5 and extraction agent injecting parts 4 between a raw material feeding part 2 and a solid discharging port 3, and a kneading part 6 positioned at a screw axis 7 part between the extraction agent discharging part 5 and the extraction agent injecting part 4.

The extractor of this embodiment is characterized in that it has a vent port 13 between sets using different extraction agents.

An extraction method will be described which is characterized in that a remaining solvent is removed by evaporation by discharge from the vent port 13 before conveyance of a raw material to a set using a different extraction agent, using such an extracting machine of this embodiment.

When there are a plurality of additives to be extraction-removed from a raw material and they cannot be extracted with a single extraction agent solely, it is effective to repeat extraction with a plurality of extraction agents.

However, when a first extraction agent remains in a raw material while another extraction agent is injected and mixed with this, the purity of an extraction agent discharged decreases, leading to decrease in yield and efficiency in recovering a solvent.

Then, a mechanism as shown in Fig. 2 is utilized in which, between the raw material feeding part 2 and the solid discharging port 3, a plurality of extraction agent discharging parts 5, a kneading part 6 equipped on a screw axis 8, an extraction agent injecting part 4 and a pressure increasing mechanism 10 are provided along the conveying direction in this order (right direction in Fig. 2).

By evaporating a remaining solvent by discharge from a vent port 13 using a vacuum pump 14 and the like, carrying of a first solvent to an extraction zone from the extraction agent discharging part 5 to the pressure increasing mechanism 10 in the post-stage can be prevented. By placing a trap which cools a discharge between the vent port 13 and the vacuum pump 14, an extraction agent evaporated from the vent port 13 can be condense-trapped efficiently.

As the constitution in carrying out the same mechanism by parallel flow extraction after countercurrent extraction, there is a constitution as shown in Fig. 3 in which, between the pressure increasing mechanism 10 and the solid discharging port 3, there are further a vent port 13 for evaporation-removing a remaining solvent, an extraction agent injecting part 4, a kneading part 6 equipped on a screw axis 8, an extraction agent discharging part 5 and a pressure increasing mechanism 10 arranged along the conveyance direction in this order.

When compatibility of a second extraction agent and a raw material is smaller, the flowability of a raw material in the post-stage deteriorates and it is not easy to conduct countercurrent extraction in some cases. However, even in such cases, parallel flow extraction can be conducted in many cases.

Of course, the number of stages is not limited to two as described above, and three or more stages may be used, and in this case, extraction agents used in respective stages may overlap.

Until here, Embodiments 1 and 2 have been described in detail, and main points thereof are described again below.

The above descriptions have explained an extruder having a raw material conveying mechanism 1, a raw material feeding part 2 and a solid discharging port 3, having an extraction agent discharging part 5 and an extraction agent injecting part 4 between the raw material feeding part 2 and the solid discharging port 3, further having a kneading part 6 between the extraction agent discharging part 5 and the extraction agent injecting part 4.

Further, an extraction method has been explained characterized in that a raw material is fed from the raw material feeding part 2 to such an extruder, an extraction agent is injected from the extraction agent injecting part 4 and the raw material and the extraction agent are kneaded in contact condition to effect extraction of components in the raw material.

Particularly, a screw extruder has been explained, conveying a raw material, subject of solvent extraction, by using a screw axis 8 equipped in a barrel 7 and having a raw material feeding part 2, an extraction agent discharging part 5, a kneading part 6 provided on a screw axis 8, an extraction agent injecting part 4, a pressure increasing mechanism and a solid discharging port 3 along the conveyance direction by the screw axis 8 in this order.

Also, an extraction method has been explained in which a raw material is fed from the raw material feeding part 2 to such an extruder, an extraction agent is injected from the extraction agent injecting part 4 and the raw material and the extraction agent are kneaded in contact condition utilizing counter flow in the barrel to effect extraction of components in the raw material. By such an extraction method, high removal ratio can be realized with a solvent in amount as small as possible, in conducting extraction with an extraction agent of unnecessary components from a solid raw material such as a resin, animal and plant material and the like (extraction-removal of additives disturbing in material recycle of waste plastics.).

Further, a screw extruder has been explained characterized in that it has a mechanism in which, between a raw material feeding part 2 and a solid discharging port 3, a plurality of extraction agent discharging parts 5, a kneading part 6 equipped on a screw axis 8, an extraction agent injecting part 4 and a pressure increasing mechanism 10 are arranged along the conveying direction in this order, and a vent port 13 is provided between sets using different extraction agents.

Furthermore, an extraction method has been explained characterized in that evaporation-removal of a remaining solvent is conducted by discharge from a vent port 13 before conveyance of a raw material to a set using a different extraction agent, using such an extruder. According to such an extraction method, carrying of a first solvent to an extraction zone from the extraction agent discharging part 5 to the pressure increasing mechanism 10 in the post-stage can be prevented; consequently, recovering cost of a solvent can be decreased.

As a subject for which extraction-removal of unnecessary components such as additives and the like by using different extraction agents is effective, there are listed resins containing as an additive antimony trioxide, selected from the group consisting of polystyrene resins, ABS resins, polycarbonate resins, polyethylene terephthalate resins, polybutylene terephthalate resins and polyolefin resins.

When such a resin is a flame retardant resin, a halogen-based flame retardant is contained as a flame retardant main agent additionally, and antimony trioxide is added and contained as a polymerization catalyst residue and flame retardant aid in many cases.

In any case, antimony trioxide can be extraction-removed by allowing it to contact with ethylene glycol or propylene glycol under heat.

However, antimony trioxide is extraction-removed at low extraction efficiency when present simultaneously with other additives, while can be extraction-removed at high efficiency after removal of other additives previously co-existing.

The reason for this is hypothesized by the inventors as follows: the mutual action of antimony trioxide with other additives co-existing is larger than the mutual action of antimony trioxide with ethylene glycol or propylene glycol forming a complex salt with it; consequently, extraction-removal of antimony trioxide becomes difficult in the case of co-existence.

Namely, particularly when the raw material is a resin containing as an additive antimony trioxide, selected from the group consisting of polystyrene resins, ABS resins, polycarbonate resins, polyethylene terephthalate resins, polybutylene phthalate resins and polyolefin resins and when the extraction agent injected later is ethylene glycol or propylene glycol, treatment using different extraction agents is effective.

Of course, by removing other additives previously co-existing, mixing of other extraction agent components into an extraction agent after extraction becomes scarce, and removal of an extraction agent by distillation and the like becomes easy.

### (Embodiment 3)

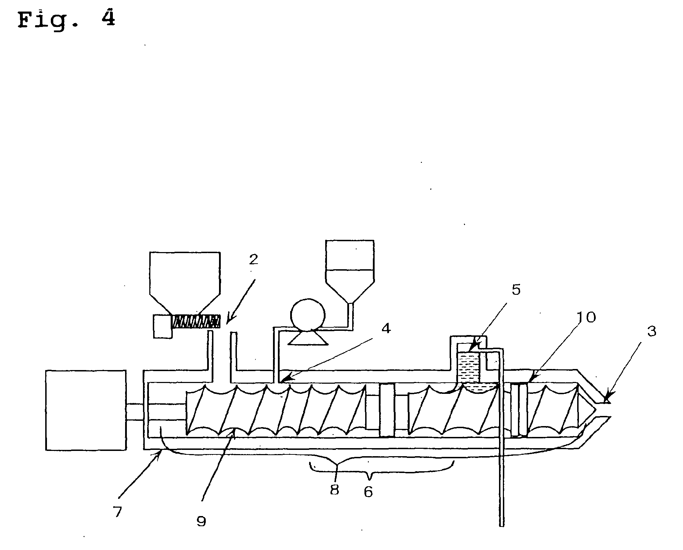

Next, the constitution and movement of an extractor according to this embodiment will be described referring mainly to Fig. 4, a schematic general constitutional view of an extractor according to Embodiment 3 of the present invention.

The extruder of this embodiment has a barrel 7, a screw axis 8 provided in the barrel 7, a raw material feeding part 2, an extraction agent discharging part 5, an extraction agent injecting part 4 and a solid discharging port 3, and convey and compress a raw material using the screw axis 8 provided in the barrel 7 along its revolting direction.

The extruder of this embodiment has the raw material feeding part 2 and solid discharging port 3 along the conveyance direction in this order. The extruder of this embodiment has the extraction agent discharging part 5 and extraction agent injecting part 4 between the raw material feeding part 2 and solid discharging port 3. Further, the extruder of this embodiment has a kneading part 6 at the screw axis 8 portion between extraction agent discharging part 5 and extraction agent injecting part 4.

In the extruder of this embodiment, the kneading part 6 has a kneading disk (or a screw having a screw-pitch penetration portion at the projection portion thereon), and a pressure increasing mechanism 10 is provided between the solid discharging port 3 and either the extraction agent discharging part 5 or the extraction agent injecting part 4, whichever is closer to the solid discharging port 3.

The pressure increasing mechanism 10 is characterized in that it is constituted of a seal ring (alternatively, a reverse screw element, a reverse kneading disk or an orifice partially reducing the sectional area of the barrel 7) at the screw axis 8 portion between the extraction agent injecting part 4 and the solid discharging port 3.

The barrel 7 usually has a structure of single barrel or of a plurality of barrels connected in series.

By sealing an opening previously processed on the barrel 7 or by utilizing the opening as it is as an opening for the raw material feeding part 2 with a lid mounted thereon for liquid injection, an extraction agent injecting part 4 can be formed.

In this barrel 7, screw axes 8 which are also one embodiment of the raw material conveying mechanism 1 are accommodated, and forward screw elements 9 are provided rotatably in the same direction parallel to these screw axes 8.

In each screw axis 8, as described above, not only a forward screw element 9 but also a kneading part 6 using a kneading disk (or a screw having a screw-pitch penetration portion at the projection portion thereon), and a pressure increasing mechanism 10 are combined and provided in series.

When the screw axis 8 is a twin-axis or multi-axis, respective forward screw elements 9 are constituted so that the outer diameter parts thereof mutually engage along the axis direction.

The extruder of this embodiment has a raw material feeding part 2, an extraction agent injecting part 4, a kneading part 6 equipped on the screw axis 8, an extraction agent discharging part 5, a pressure increasing mechanism 10 and a solid discharging port 3 along the conveyance direction by the screw axis 8 in this order.

A resin fed from the raw material feeding part 2 falls on the forward screw element 9 and is conveyed by rotation of a screw.

When the raw material is a thermoplastic resin, it can be conveyed by melting it by a heating operation and a kneading operation from the barrel 7 depending on demands.

The raw material can be further compressed by gradually decreasing screw pitch and screw depth, and the pressure in the barrel 7 can be gradually increased along the conveyance direction.

On the other hand, an extraction agent is injected from the extraction agent injecting part 4. Injection of an extraction agent can be attained by feeding liquid into the extraction agent injecting part 4 using a gear pump (not shown) and the like.

Flow of the injected extraction agent to the post-stage is prevented by increase in inner pressure by the pressure increasing mechanism 10 provided on the screw axis 8, between a solid discharging port 3 and either the extraction agent discharging part 5 or the extraction agent injecting part 4, whichever is closer to the solid discharging port 3.

In the pressure increasing mechanism 10, a screen mesh and the like provided in a barrel 7 can be used, however, in this embodiment, a seal ring is used as the pressure increasing mechanism 10 provided on the screw axis 8 as described above.

By providing the pressure increasing mechanism 10 on the screw axis 8, washing of the inside of the barrel 7 and of the screw axis 8 becomes easier in comparison with the case when a screen mesh is provided in the barrel 7 or when a screen changer or the like is provided in an extrusion flow route. Together with this, change in pressure increase by adhesion of a clogging substance to a screen mesh and the like does not occur easily and stable operation is possible.

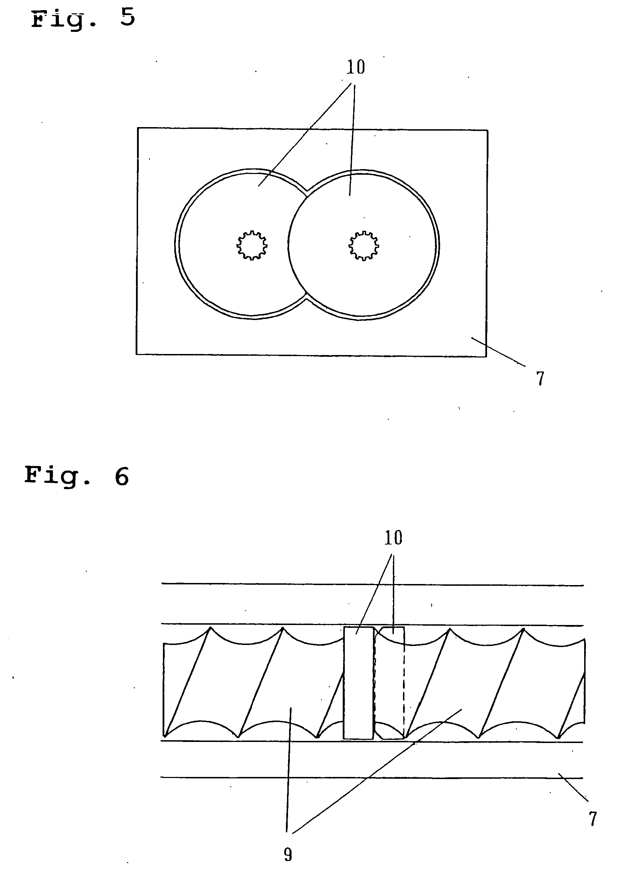

The seal ring is a disk closing the axis section in the barrel 7 as shown in Fig. 5. The seal rings are so placed that, with a seal ring provided on one screw axis, a seal ring on another screw ring comes into contact in the post-stage side as shown in Fig. 6.

On the seal ring, a taper may be provided on the upper stage side or down stage side of the conveyance direction or on both sides.

Between the outer diameter of each seal ring and the inner diameter of the barrel 7, a clearance is formed. This clearance between the outer diameter of each seal ring and the inner diameter of the barrel 7, a clearance between seal rings and a clearance between rings formed by taper parts, constitute a flow route for a resin. Namely, when the clearances are set smaller than that of a flow route at the forward screw element 9 of the pre-stage, flow is disturbed and the pressure increasing mechanism 10 functions.

A reverse screw element is an element in the form of screw of reverse direction to the forward screw element 9.

The conveyance ability of a resin is controlled by screw pitch and screw depth. For example, by placing a reverse screw element having a smaller resin conveying ability than that of the forward screw element 9 of the pre-stage, conveyance of a resin can be disturbed and the pressure increasing mechanism 10 functions.

Reverse kneading disks can be provided by combining kneading disks in several stages.

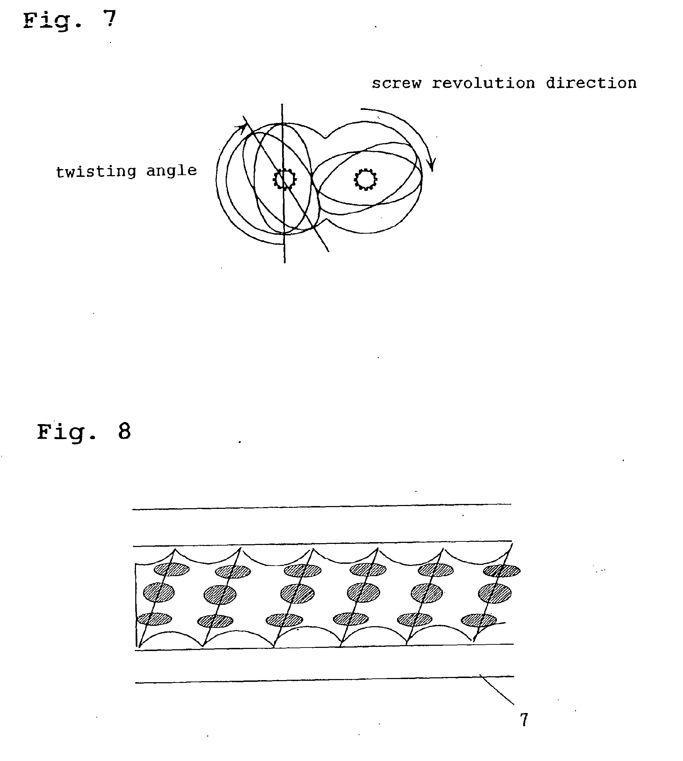

The kneading disks are a plate having an ellipse section formed on the axis as shown in Fig. 7, and combined so that the longitudinal directions of disks provided on both axes cross directly. The peripheral parts of both disks are always in mutual contact.

When the twisting angle with the longitudinal axis of a kneading disk of the post-stage is 90° or more, the resin conveyance direction becomes reverse, and the conveyance ability lowers in total, and the pressure increasing mechanism 10 functions.

A melted resin having low flowability is transported to the higher pressure side by the forward screw element 9. However, an extraction agent showing low mutual solubility with a resin will leak to the lower pressure side through a clearance of a resin due to its high flowability (fluid originally flows from a higher pressure part to a lower pressure part). In the extractor of this embodiment, the pressure increasing mechanism 10 as described above is provided, and by movement of this, an extraction agent can be transported in the reverse direction of the conveyance direction of a raw material.

The extraction agent discharging part 5 for discharging an extraction agent may be advantageously provided by providing an opening on the barrel 7 and inducing an extraction agent separated and derived from a raw material out of the barrel 7 through a piping or the like. The opening may be placed on the upper surface. Further, it may also be permissible that the opening is placed on the side surface or lower surface and leaking of a raw material out of the barrel 7 is prevented by slits and the like.

The kneading part 6 is provided on the screw axis 8 between the extraction agent discharging part 5 and the extraction agent injecting part 4, for promoting contact of an extraction agent with a raw material. The kneading part 6 can be constituted by appropriately combining a kneading element which is a plate having an ellipse section as described above, a forward screw element 9, a forward screw element 9 having notch on the periphery of screw teeth as shown in Fig. 8, and the like.

The kneading element is used in an extruder having two or more axes. Here, kneading disks are combined so that the longitudinal directions of disks provided on respective axes cross directly, and the peripheral parts of both disks are always in mutual contact. However, when the twisting angle of the longitudinal axis of a kneading element of a stage with the longitudinal axis of a kneading disk of the post-stage is 90° or less, force of conveying a resin in the forward direction is also generated. In contrast, when the above-mentioned twisting angle is 90° or more, the direction of conveying a resin reverses.

The solid discharging port 3 through which solid separated from an extraction agent is discharged is provided on the post-stage of the pressure increasing mechanism 10.

When the solid to be discharged is a resin, the solid discharging port 3 may also be a discharging port through which such solid is discharged in the sectional form of fiber, rod or film.

Thus, by accommodating elements of an extruder into the barrel 7, it becomes possible to suppress evaporation and diffusion of an extraction agent in heating, or to reduce the content of an extraction agent in solid discharged by the pressure increasing mechanism 10. Consequently, extraction can be carried out more efficiently.

Particularly in an extruder having an extraction agent discharging part 5 and an extraction agent injecting part 4 in this order between a raw material feeding part 2 and a solid discharging port 3, a procedure is carried out in which a raw material is fed from the raw material feeding part 2, an extraction agent is injected from the extraction agent injecting part 4, and the raw material and the extraction agent are kneaded in contact condition utilizing counter flow in the barrel 7 to conduct extraction of components in the raw material.

In this case, the pressure increasing mechanism 10 can help carry out an extraction operation stably since it manifest a pressure increasing ability so that formation of pressure gradient in the barrel and suppression of carrying of an extraction agent to the solid discharging port 3 are satisfied simultaneously.

Further, since the flow direction of an extraction agent is reverse of the raw material conveying direction, the concentration gradient of an extraction component in an extraction agent becomes smaller along the raw material conveying direction. Therefore, extraction can be conducted with a relatively small amount of an extraction agent since carrying amount of an extraction agent to the post-stage of the pressure increasing mechanism 10 is small even if such carrying exists.

For kneading an extraction agent and a raw material and allowing the extraction agent to flow in the reverse direction of the extruding direction of the raw material, it is preferable that the screw axis 8, as described above, has a screw shape having a screw-pitch penetration portion at the projection portion thereon.

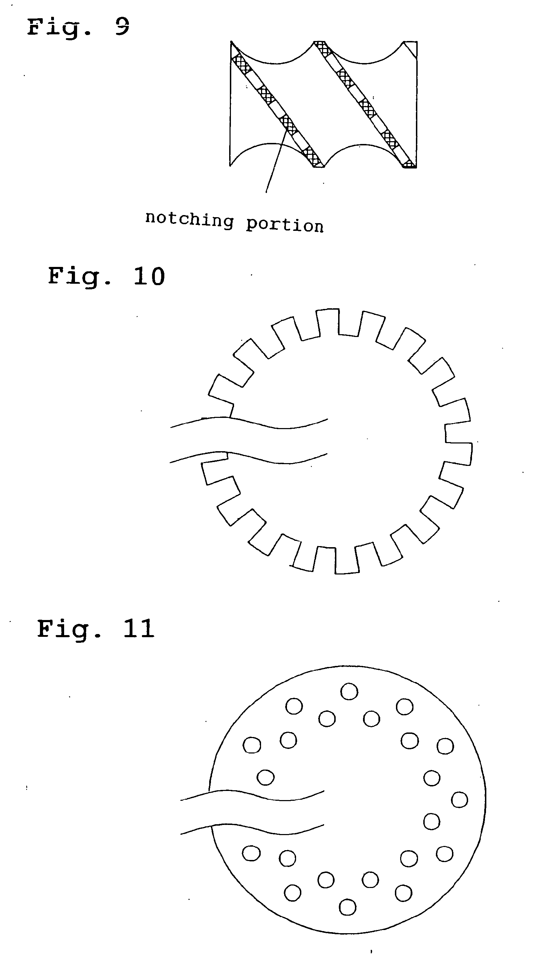

More specifically, a screw in the form having notching on the projection portion (flight part) thereon as shown in Fig. 9, a screw having a section in the form of gear as shown in Fig. 10, a screw in the form having penetration holes on the projection portion as shown in Fig. 11, and the like are listed.

The screw compresses a raw material toward the conveyance direction by rotation, and there arises a pressure difference toward the conveyance direction around inter-pitch portion.

When a inter-screw pitch penetration portion is provided as described above, there can occur flow of a raw material and an extraction agent from a pitch of the conveyance direction side to a pitch before it through the penetration portion. By this flow, kneading of a raw material and an extraction agent is promoted, to improve extraction ratio.

Since an extraction agent having lower viscosity than that of a raw material shows higher flowability than the raw material, an influence of inter-pitch pressure difference surmounts compression by rotation of a screw; therefore, such an extraction agent can flow toward the reverse direction of the conveyance direction.

However, in a usual full flight screw having complete projection portions thereon, there is no sufficient space for reverse flow of an extraction agent (even if such a space exists, an extraction agent flow between a screw and barrel 7 and kneading with a raw material does not progress easily) .

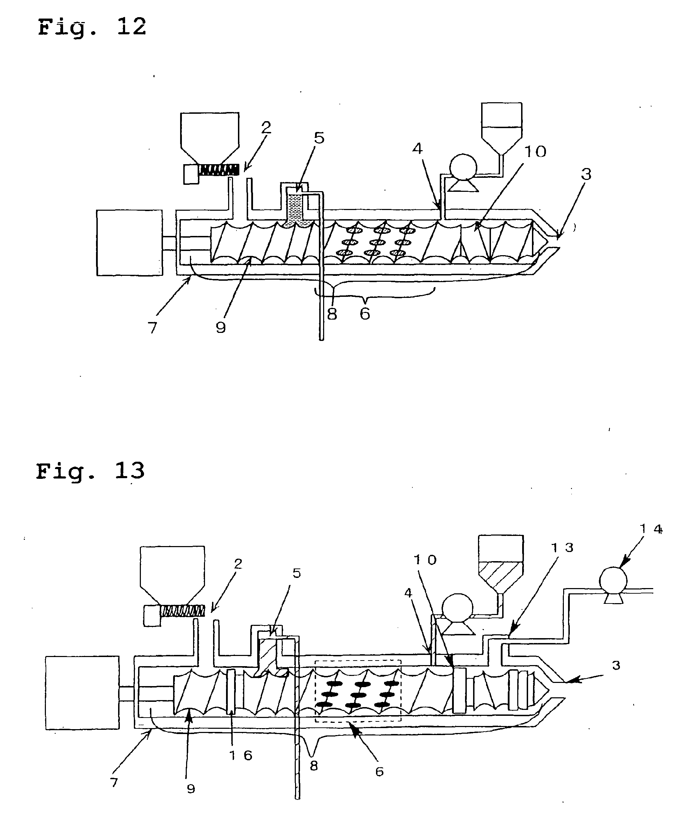

Then, by providing and positively utilizing an inter-screw pitch penetration portion as described above, flow toward the reverse direction of an extraction agent having low viscosity is promoted. As a result, kneading of a raw material and an extraction agent progresses, and extraction can be conducted at high efficiency. An example of the constitution of such an extruder is shown in Fig. 12.

A constitution when a vent port 13 is further provided on the post-stage of the pressure increasing mechanism 10 and an extraction agent remaining in a raw material which has been subjected to extraction is discharging-removed is shown in Fig. 13 (it is a schematic general constitutional view of an extruder in the case of twin-axis).

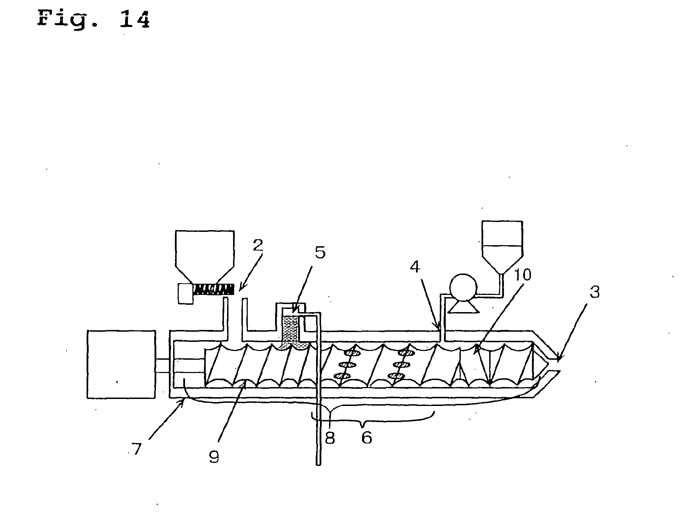

Fig. 14 is a schematic general constitutional view of an extruder in the case of single-axis according to this embodiment. In the case of single-axis, a mutual scraping effect between screws cannot be expected, however, a kneading property can be enhanced by providing grooves and the like on the inside of the barrel 7.

Of course, the barrel 7 may be constituted of one barrel or constituted by connecting a plurality of cylindrical barrels in series. The barrel 7 may also be divided along the longitudinal direction of the screw axis 8.

The screw axis 8 accommodated in the barrel 7 may be an integrated type screw axis in which a forward screw element 9 and a reverse screw element are integrated and process for making a shape corresponding to a seal ring has been conducted.

Such an extruder (see Fig. 14) has a raw material feeding part 2, an extraction agent discharging part 5, a kneading part 6 provided on a screw axis 8, an extraction agent injecting part 4, a pressure increasing mechanism 10 and an extraction agent discharging part 5, along the conveyance direction by the screw axis 8 in this order.

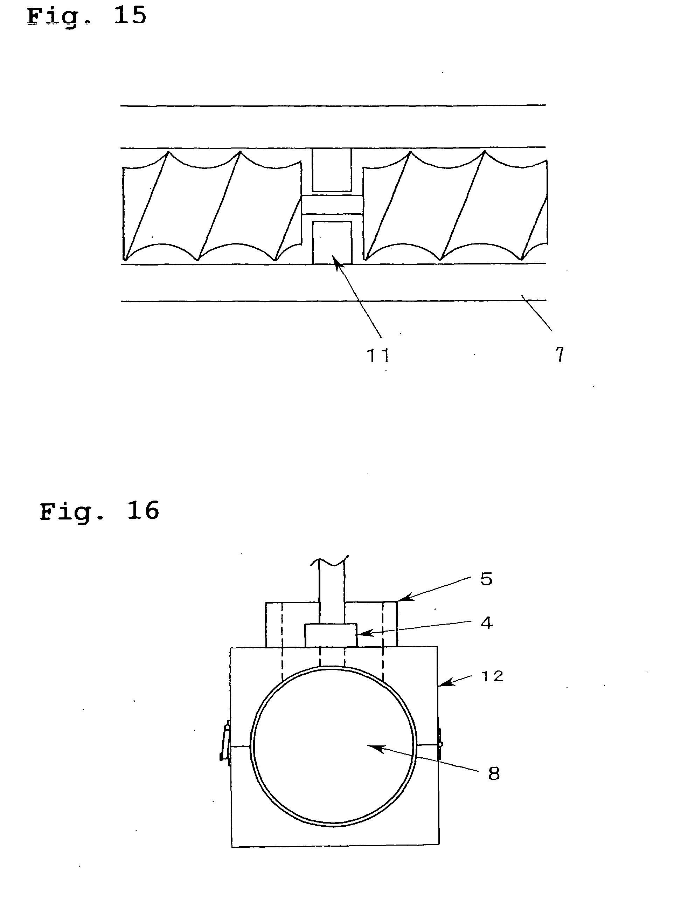

As the pressure increasing mechanism 10, a constitution using a reverse screw element is shown (Fig. 14), however, an orifice 11 can also be used as the pressure increasing mechanism 10 as shown in Fig. 15.

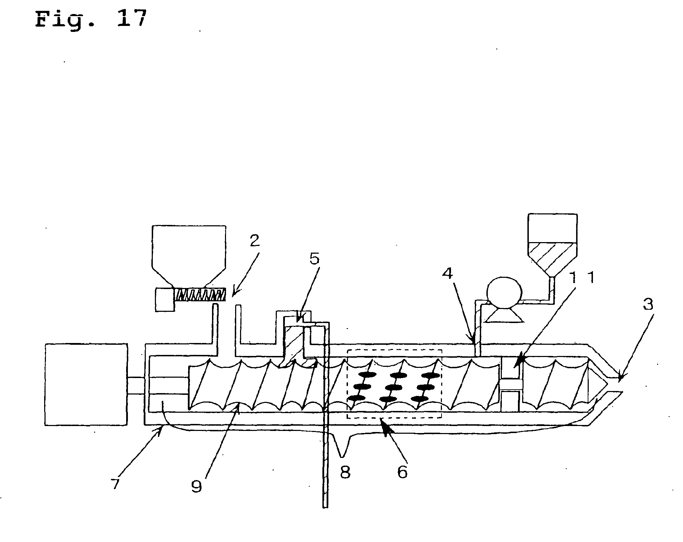

Though it is difficult to extract the screw axis 8 toward the axis direction, convenient handling is possible in taking out a screw axis and the like by utilizing the constitution of an above and below dividing type barrel 12 or the like as shown in Fig. 16. The constitution of an extruder of such a constitution is shown in Fig. 17.

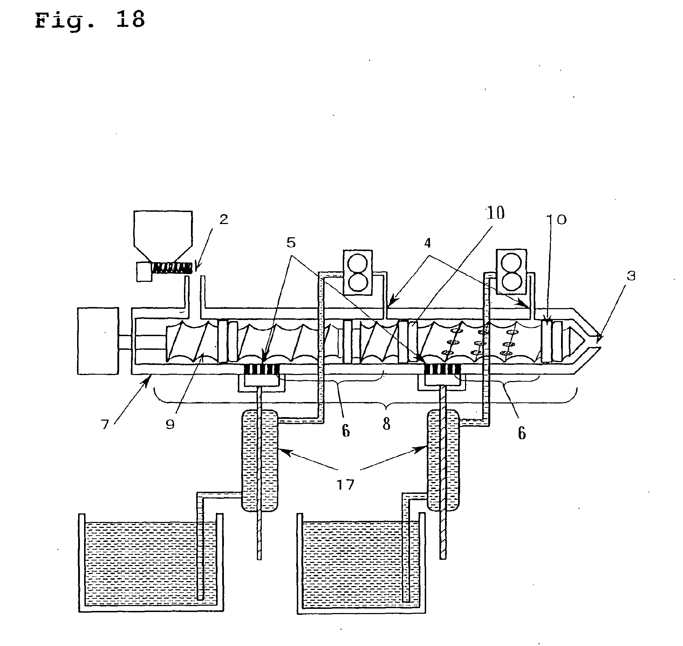

The extraction agent is heated at high temperature by heating of the barrel 7 in a kneading and extracting operation in the barrel 7; however, when the temperature of the extraction agent injected is low, the injected extraction agent temporarily cools a raw material. Therefore, consumption electric power for an extruder increases and the extraction efficiency is disturbed, in some cases. Then, by providing a heat exchange mechanism 17 for a discharging extraction agent and an extraction agent transported to the extraction agent injecting part 4 as shown in Fig. 18, consumption electric power can be suppressed and the extraction efficiency can be enhanced.

### (Embodiment 4)

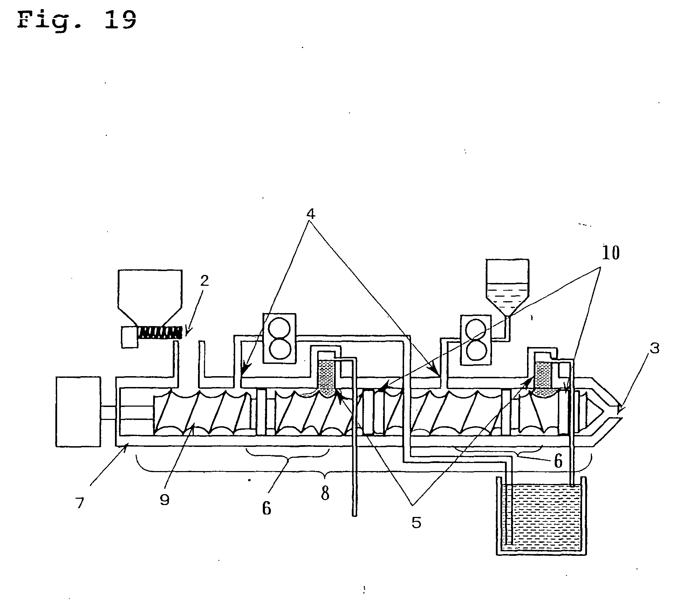

Next, the constitution and movement of an extractor according to this embodiment will be described referring mainly to Fig. 19, a schematic general constitutional view of an extractor according to Embodiment 4 of the present invention.

The extruder of this embodiment has, between a raw material feeding part 2 and a solid discharging port 3, a plurality of sets of extraction agent discharging parts 5, extraction agent injecting parts 4, and kneading parts 6 positioned at a screw axis 8 part between the extraction agent discharging part 5 and the extraction agent injecting part 4.

The extruder of this embodiment is characterized in that it has a mechanism of conveying liquid containing an extraction agent discharged from the extraction agent discharging part 5 on the side of the solid discharging port 3 to the extraction agent injecting part 4 on the side of the raw material feeding part 2 as an extraction agent.

In the extruder having, between a raw material feeding part 2 and a solid discharging port 3, a plurality of sets of extraction agent discharging parts 5, extraction agent injecting parts 4, and kneading parts 6 positioned at a screw axis 8 part between the extraction agent discharging part 5 and the extraction agent injecting part 4, the extraction efficiency can be enhanced by multi-stage extraction.

Further, since the waste extraction agent at the post-stage has a low concentration of an extraction substance, extraction is sufficiently possible even if this is re-used as the extraction agent at the pre-stage. By re-use of an extraction agent, the efficiency of utilizing an extraction agent increases, being economically effective in particular.

Even if the above-mentioned countercurrent extraction is difficult due to boiling of a raw material such as resin or the like in the extraction agent discharging part 5 and parallel flow extraction in which a raw material and an extraction agent flow in the same direction has to be utilized, the extraction efficiency nearer to that of countercurrent extraction can be realized.

As described above, by providing a vent port (figure is omitted) for evaporation-removing a remaining solvent between any sets, the amount of an extraction agent contained in a raw material in inter-stage shift of extraction decreases, and permeation of an extraction agent into a raw material in the next stage is positively conducted.

As a result, an effect of enhancing extraction efficiency can be obtained (when a raw material shifts to the next stage while maintaining inclusion of an extraction agent, diffusion of an extraction agent into a raw material and diffusion of an extraction substance between the extraction agent in a raw material and a new extraction agent delay.).

Here, in some cases, the injected extraction agent flows toward the reverse direction of the conveyance direction of a raw material, then, cannot be discharged sufficiently from an extraction agent discharge port and reaches to the raw material feeding part 2; consequently disturbances such as bridge of a raw material around a raw material feeding port, and the like may occur.

Such a disturbance can be significantly prevented by a constitution having an extraction agent reverse flow preventing mechanism 16 (see Fig. 13) constituted of a seal ring at the screw axis 8 between the raw material feeding part 2 and the extraction agent discharging part 5.

More specifically, it is preferable to provide an extraction agent reverse flow preventing mechanism 16 for preventing reverse flow of an extraction agent by utilizing a melted resin gasket formed indirectly by a kneading disk and the like between the raw material feeding part 2 and the extraction agent discharging part 5, as disclosed in JP-A No. 7-149818 and the like.

It is possible to use as a raw material a polymer composition containing a polymer compound as the main component and components other than the polymer compound, and to conduct extraction-removal of the components in the raw material by kneading the raw material and an extraction agent in contact condition, to produce a thermoplastic resin as so-called material recycle.

In a polymer composition, various additives such as plasticizers, reinforcing agents, coloring agents, antioxidants, flame retardants, antistatic agents and the like are in general compounded and used.

Namely, in a polymer compound, additives are compounded to impart physical properties corresponding to applications. Therefore, even if resins for different applications are tried to be mixed and re-used, these additives show a complicated action, irregular abilities are manifested, and abilities lower overall.

Then, the production method as described above is applied, unnecessary additive components can be removed; consequently, a thermoplastic resin of high quality can be produced.

Of course, even if a polymer compound, raw material, is a thermoplastic resin recovered from a used product, deteriorated components are extraction-removed, therefore, the thermoplastic resin treated and produced shows small decrease in physical properties and shows high utility.

For example, even if components other than the polymer compound are bromine-based flame retardants, unnecessary additive components are removed from the thermoplastic resin treated and produced. Therefore, such a thermoplastic resin shows a low possibility of producing an environmentally loading substance even if an inappropriate treatment is conducted as found in lower temperature burning such as open-air burning after re-use thereof.

When a raw material is a thermoplastic resin containing a component dissolved in an extraction agent, the component contained in its thermoplastic resin can be extraction-removed as described above, and material recycle of the resin can be made easy.

Listed as thermoplastic resins are thermoplastic resins capable of being melted by heat such as polyethylene, polypropylene, polyvinyl chloride, polyvinyl acetate-based resins (polyvinyl acetate and the like), polyoxymethylene, styrene-based resins (polystyrene, ABS resin and the like), acrylic resins (PMMA and the like), polyester-based resins (PET and the like), polyamide-based resins (nylon 6 and the like), polyphenylene ether-based resins, polycarbonate-based resins and the like.

As components contained in a thermoplastic resin, there are listed various components such as stabilizing agents against heat and light, antioxidants, softening agents, plasticizers, antistatic agents, flame retardants, coloring agents, physical property reinforcing agents and the like.

Particularly a lot of flame retardants are suspected of harmful properties of itself or of its heat-reacted substance. Therefore, by extraction-removing a flame retardant, material recycle of a thermoplastic resin, raw material, can be conducted safely, being very useful.

By such an extraction-removal treatment, a thermoplastic resin containing an environmentally loading substance can be changed to a thermoplastic resin containing no environmentally loading substance. Namely, a thermoplastic resin subjected to the extraction-removal treatment as described above is such a substance which is obtained by washing a thermoplastic resin polluted with an environmentally loading substance, and can be utilized as a product again without worrying about safety.

### EXAMPLES

### (Example 1)

A twin-axis extruder having a screw diameter of 25 mm was utilized.

More specifically, the extraction agent injecting part 4 and the extraction agent discharging part 5 were placed as shown in Fig. 4. Namely, a raw material feeding part 2, an extraction agent injecting part 4, a kneading part 6 provided at a screw axis 8, an extraction agent discharging part 5, a pressure increasing mechanism 10 and a solid discharging port 3 were placed in this order.

A high impact polystyrene resin containing 20 wt% of a bromine-based flame retardant and an ethyl lactate extraction agent were fed respectively in amounts of per hour 3 kg and 9 kg, and subjected to extraction-operation at a screw revolution of 300 rpm.

The same operation was conducted also in the case of a pressure increasing mechanism 10 constituted of a seal ring as shown in Fig. 5, and the case of a pressure increasing mechanism 10 constituted of reverse kneading disks having a twisting angle of 120°

The discharged resin was analyzed to find decrease in the content of the bromine-based flame retardant to 3 to 5 wt% in each case.

### (Example 2)

A twin-axis extruder having a screw diameter of 25 mm was utilized.

More specifically, the extraction agent injecting part 4 and the extraction agent discharging part 5 were placed as shown in Fig. 6. Namely, a raw material feeding part 2, an extraction agent discharging part 5, a kneading part 6 provided at a screw axis 8, an extraction agent injecting part 4, a pressure increasing mechanism 10 and a solid discharging port 3 were placed in this order.

A high impact polystyrene resin containing 20 wt% of a bromine-based flame retardant and an ethyl lactate extraction agent were fed respectively in amounts per hour of 3 kg and 9 kg, and subjected to extraction-operation at a screw revolution of 300 rpm.

The same operation was conducted also in the case of a pressure increasing mechanism 10 constituted of a seal ring, and the case of a pressure increasing mechanism 10 constituted of reverse kneading disks having a twisting angle of 120°.

The discharged resin was analyzed to find decrease in the content of the bromine-based flame retardant to 2 to 4 wt% in each case.

### (Example 3)

An extruder in which a raw material conveying mechanism 1 is constituted of a single-axis screw having a screw diameter of 25 mm as shown in Fig. 14 was used.

A high impact polystyrene resin containing 20 wt% of a bromine-based flame retardant and an ethyl lactate extraction agent were fed respectively in amounts per hour of 3 kg and 9 kg, and subjected to extraction-operation at a screw revolution of 300 rpm.

The same operation was conducted also in the case of a pressure increasing mechanism 10 constituted of an orifice 11 as shown in Fig. 17.

The discharged resin was analyzed to find decrease in the content of the bromine-based flame retardant to 3 to 4 wt% in each case.

### (Example 4)

An extruder in which a forward screw element 9 having notching on the periphery of screw teeth (see Fig. 9) had been set at a kneading part 6 provided on a screw axis 8 as shown in Fig. 12 was used.

A high impact polystyrene resin containing 20 wt% of a bromine-based flame retardant and an ethyl lactate extraction agent were fed respectively in amounts per hour of 3 kg and 9 kg, and subjected to extraction-operation at a screw revolution of 300 rpm.

The discharged resin was analyzed to find decrease in the content of the bromine-based flame retardant to about 0.2 wt%.

### (Example 5)

A twin-axis extruder having a screw diameter of 25 mm was utilized.

More specifically, the extraction agent injecting part 4 and the extraction agent discharging part 5 were placed as shown in Fig. 2. Namely, the vent port 13 is sandwiched between the raw material feeding part 2 and the solid discharging port 3. There were a plurality of sets of extraction agent discharging parts 5, kneading parts 6 provided on the screw axis 8, extraction agent injecting parts 4 and pressure increasing mechanisms 10 provided on the screw axis 8.

As the pressure increasing mechanism 10, a reverse screw element was used.

A high impact polystyrene resin containing 20 wt% of a bromine-based flame retardant and 5 wt% of an antimony trioxide flame retardant aid, ethyl lactate as a first extraction agent, and propylene glycol as a second extraction agent were fed respectively in amounts per hour of 3 kg, 9 kg and 9 kg, and subjected to extraction-operation at a screw revolution of 300 rpm.

The discharged resin was analyzed to find decrease in the content of the bromine-based flame retardant to 3 wt%, and decrease in the content of the antimony trioxide flame retardant aid to 1.2 wt%.

The content of ethyl lactate in the extraction agent discharged from the extraction agent discharging part 5 at the second stage was 2%.

90% of the total amount of the discharged resin was distilled, as a result, the purity of propylene glycol was 99.2%, and it could be recovered at sufficiently high purity.

### (Example 6)

A four-axis extruder having a screw diameter of 25 mm was utilized.

More specifically, the extraction agent injecting part 4 and the extraction agent discharging part 5 were placed as shown in Fig. 3. Namely, the vent port 13 is sandwiched between the raw material feeding part 2 and the solid discharging port 3. (A) In the pre-stage, the extraction agent discharging part 5, the kneading part 6 provided on the screw axis 8, the extraction agent injecting part 4 and the pressure increasing mechanism 10 provided on the screw axis 8 were placed in this order, and (B) in the post-stage, the extraction agent injecting part 4, the kneading part 6 provided on the screw axis 8, the extraction agent discharging part 5 and the pressure increasing mechanism 10 provided on the screw axis 8 were placed in this order,

As the pressure increasing mechanism 10, a reverse screw element was used.

A high impact polystyrene resin containing 20 wt% of a bromine-based flame retardant and 5 wt% of an antimony trioxide flame retardant aid, dipropylene glycol as a first extraction agent, and ethylene glycol as a second extraction agent were fed respectively in amounts per hour of 5 kg, 15 kg and 15 kg, and subjected to extraction-operation at a screw revolution of 500 rpm.

The discharged resin was analyzed to find decrease in the content of the bromine-based flame retardant to 1 wt%, and decrease in the content of the antimony trioxide flame retardant aid to 1.6 wt%.

The content of ethyl lactate in the extraction agent discharged from the extraction agent discharging part 5 at the second stage was 1.8%.

90% of the total amount of the discharged resin was distilled, as a result, the purity of propylene glycol was 99.3%, and it could be recovered at sufficiently high purity.

### (Example 7)

The same twin-axis extruder as in Example 4 was used.

The extraction agents used in extraction at the first stage and the second stage shown in Table 1 were fed in an amount of each 9 kg per 3 kg of each resin shown in Table 1, and an extraction operation was conducted at a screw revolution of 400 rpm.

The content of a bromine-based flame retardant and the content of antimony trioxide of the discharged resin were measured.

The results are as shown in Table 1.

**Table 1**

| Kind of resin | Additive 1 | Antimony trioxide | Extraction agent 1 | Extraction agent 2 | Content of Additive 1 | Convent of antimony trioxide |
|---|---|---|---|---|---|---|
| Polystyrene resin | Bromine based flame retardant 16% | 3% | Dipropylene glycol | Ethylene glycol | 1.1% | 0.8% |
| ABS resin | Bromine based flame retardant 23% | 3% | Ethyl lactate | Ethylene glycol | 1.9% | 1.0% |
| Polycarbonate resin | Phosphorus-based flame retardant 15% | 2% | Dipropylene glycol | Ethylene glycol | 0.5% | 0.6% |
| Polyethylene terephthalate resin | Nitrogen-based flame retardant 23% | 3% | Ethyl lactate | Ethylene glycol | 1.4% | 0.7% |
| Polybutylene terephthalate resin | Bromine based flame retardant 16% | 3% | Dipropylene glycol | Propylene glycol | 1.0% | 0.9% |
| Polyolefin resin | Chlorine-based flame retardant 18% | 3% | Dipropylene glycol methyl ether | Propylene glycol | 0.9% | 0.6% |

Above, embodiments and examples of the present invention have been explained.

According to the present invention, useful and unnecessary components can be extracted with an extraction agent from a solid raw material such as resins, animal and plant materials and the like, by applying a technology of a screw extruder.

Particularly, in extraction-removing an additive contained in a waste plastic with a solvent, high removal ratio can be realized with a solvent in amount of as small as possible and recovery of an extraction agent can be realized at low cost.

Further, it is possible to newly produce a useful thermoplastic resin from a used resin.

### INDUSTRIAL APPLICABILITY

The present invention has a merit that additives such as flame retardants and the like contained in a waste plastic can be extraction-removed at higher removal ratio (extraction ratio) by utilizing a solvent.

## Claims

1. An extractor comprising:
a barrel (7) in which a thermoplastic resin containing a flame retardant and a predetermined extraction agent are introduced and mixed;
a screw shaft (8) that is disposed in said barrel (7), and that conveys said resin in a longitudinal direction from an upper flow side to a lower flow side, compresses the resin, and mixes said resin and said extraction agent;
heating means for heating said resin in said barrel (7);
a resin supplying port (2) that supplies said resin to said barrel (7);
a resin discharging port (3) that discharges the resin supplied from said resin supplying port (2) and conveyed by said screw shaft (8); and
an extraction agent injecting port (4) that is disposed at a lower flow side of said resin supplying port (2) in said resin conveying direction and an upper flow side of said resin discharging port (3) and that injects said extraction agent in said barrel (7);
**characterized in that**
an extraction agent discharging port (5) that is disposed at a lower flow side of said resin supplying port (2) in said resin conveying direction and an upper flow side of said resin discharging port (3), and at an upper or lower flow side of said extraction agent injecting port (4) in said resin conveying direction, and that discharges the extraction agent, to an outside of said barrel (7), that has been mixed with the resin including said flame retardant and has had said flame retardant extracted; and
a pressure increasing mechanism (10) that is disposed at a lower flow side of said extraction agent discharging port (5) in said resin conveying direction and an upper flow side of said resin discharging port (3), and that increases a pressure in said barrel (7).

2. The extractor according to claim 1,
wherein said extraction agent injecting port (4) has a plurality of extraction agent injection ports for injection of said predetermined extraction agent, provided at different positions relative to said longitudinal direction of the wall surface of said barrel (7), and
said extraction agent discharging port (5) has a plurality of extraction agent discharging ports for discharge of said predetermined extraction agent, provided at different positions relative to said longitudinal direction of the wall surface of said barrel (7), after respective said plurality of extraction agent injection ports (4).

3. The extractor according to claim 2,
wherein said extraction agent discharge port (5) is provided at a lower flow side of said extraction agent injection port (4) in said resin conveying direction.

4. The extractor according to claim 3,
wherein between said extraction agent discharge port and extraction agent injection port, a vent port (13) is provided for evaporation-removal of said corresponding predetermined extraction agent.

5. An extractor according to claim 1,
wherein said extraction agent injecting port (4) has a single or a plurality of extraction agent injection ports for injection of said predetermined extraction agent, provided on the wall surface of said barrel (7),
said extraction agent injecting port (5) has a single or a plurality of extraction agent discharging ports for discharge of said predetermined extraction agent, provided on the wall surface of said barrel (7), and
all of part of the predetermined extraction agent discharged from said extraction agent discharge port (5) is injected again into said thermoplastic resin from said extraction agent injection port (4) situated at an upper flow side relative to the direction in which said thermoplastic resin is conveyed and compressed than said extraction agent discharge port (5).

6. An extractor according to claim 1,
wherein said extraction agent discharging port (5) is disposed at an upper flow side of said extraction agent injecting port (4) in said resin conveying direction.

7. The extractor according to claim 1,
wherein said pressure increasing mechanism (10) comprises any of a seal ring provided on said screw shaft, a reverse screw element or a reverse kneading disk, and an orifice partially reducing the sectional area of said barrel.

## Patentansprüche

1. Extraktor, der umfasst:
einen Zylinder (7), in den ein Thermoplastharz, das einen Flammenhemmer enthält, und ein vorgegebenes Extraktionsmittel eingeleitet und darin gemischt werden;
einen Schneckenschaft (8), der in dem Zylinder (7) angeordnet ist und der das Harz in einer Längsrichtung von einer oberen Stromseite zu einer unteren Stromseite befördert, das Harz zusammendrückt und das Harz und das Extraktionsmittel mischt;
eine Heizeinrichtung zum Erhitzen des Harzes in dem Zylinder (7);
einen Harz-Zuführkanal (2), der das Harz dem Zylinder (7) zuführt;
einen Harz-Ausstoßkanal (3), der das über den Harz-Zuführkanal (2) zugeführte und durch den Schneckenschaft (8) transportierte Harz ausstößt; und
einen Extraktionsmittel-Einspritzkanal (4), der an einer unteren Stromseite des Harz-Zuführkanals (2) in der Harz-Transportrichtung und an einer oberen Stromseite des Harz-Ausstoßkanals (3) angeordnet ist und der das Extraktionsmittel in dem Zylinder (7) einspritzt;
**gekennzeichnet durch**
einen Extraktionsmittel-Ausstoßkanal (5), der an einer unteren Stromseite des Harz-Zuführkanals (2) in der Harz-Transportrichtung und an einer oberen Stromseite des Harz-Ausstoßkanals (3) sowie an einer oberen oder unteren Stromseite des Extraktionsmittel-Einspritzkanals (4) in der Harz-Transportrichtung angeordnet ist und der das Extraktionsmittel, das mit dem Harz vermischt worden ist, das den Flammenhemmer enthält, und das den Flammenhemmer extrahiert hat, aus dem Zylinder (7) nach außen abgibt; und
einen Druckerhöhungsmechanismus (10), der an einer unteren Stromseite des Extraktionsmittel-Ausstoßkanals (5) in der Harz-Transportrichtung und an einer oberen Stromseite des Harz-Ausstoßkanals (3) angeordnet ist und der einen Druck in dem Zylinder (7) erhöht.

2. Extraktor nach Anspruch 1,
wobei der Extraktionsmittel-Einspritzkanal (4) eine Vielzahl von Extraktionsmittel-Einspritzkanälen zum Einspritzen des vorgegebenen Extraktionsmittels aufweist, die an verschiedenen Positionen relativ zu der Längsrichtung der Wandfläche des Zylinders (7) vorhanden sind, und
der Extraktionsmittel-Ausstoßkanal (5) eine Vielzahl von Extraktionsmittel-Abgabekanälen zum Abgeben des vorgegebenen Extraktionsmittels aufweist, die an verschiedenen Positionen relativ zu der Längsrichtung der Wandfläche des Zylinders (7) nach jeweiligen der Vielzahl von Extraktionsmittel-Einspritzkanälen (4) vorhanden sind.

3. Extraktor nach Anspruch 2,
wobei der Extraktionsmittel-Ausstoßkanal (5) an einer unteren Stromseite des Extraktionsmittel-Einspritzkanals (4) in der Harz-Transportrichtung vorhanden ist.

4. Extraktor nach Anspruch 3,
wobei zwischen dem Extraktionsmitte-Ausstoßkanal und dem Extraktionsmittel-Einspritzkanal ein Entlüftungskanal (13) zum Ableiten des entsprechenden vorgegebenen Extraktionsmittels durch Verdampfung vorhanden ist.

5. Extraktor nach Anspruch 1,
wobei der Extraktionsmittel-Einspritzkanal (4) einen einzelnen Extraktionsmittel-Einspritzkanal oder eine Vielzahl davon zum Einspritzen des vorgegebenen Extraktionsmittels aufweist, die an der Wandfläche des Zylinders (7) vorhanden sind,
der Extraktionsmittel-Einspritzkanal (5) einen einzelnen Extraktionsmittel-Ausstoßkanal oder eine Vielzahl davon zum Ableiten des vorgegebenen Extraktionsmittels aufweist, die an der Wandfläche des Zylinders (7) vorhanden sind, und
das gesamte vorgegebene Extraktionsmittel, das über den Extraktionsmittel-Ausstoßkanal (5) ausgestoßen wird, oder ein Teil desselben über den Extraktionsmittel-Einspritzkanal (4), der sich an einer weiter oben gelegenen Stromseite relativ zu der Richtung, in der das Thermoplastharz transportiert und zusammengedrückt wird, befindet als der Extraktionsmittel-Ausstoßkanal (5), wieder in das Thermoplastharz eingespritzt wird.

6. Extraktor nach Anspruch 1,
wobei der Extraktionsmittel-Ausstoßkanal (5) an einer oberen Stromseite des Extraktionsmittel-Einspritzkanals (4) in der Harz-Transportrichtung angeordnet ist.

7. Extraktor nach Anspruch 1,
wobei der Druckerhöhungsmechanismus (10) einen Dichtungsring, der an dem Schneckenschaft vorhanden ist, ein Rückwärts-Schneckenelement oder eine Rückwärts-Knetscheibe sowie eine Öffnung umfasst, die die Querschnittsfläche des Zylinders teilsweise reduziert.

## Revendications

1. Extracteur comprenant:
un cylindre (7) dans lequel une résine thermoplastique contenant un retardateur de flamme et un agent d'extraction prédéterminé sont introduits et mélangés;
un arbre à vis (8) qui est disposé dans ledit cylindre (7), et qui achemine ladite résine dans une direction longitudinale à partir d'un côté d'écoulement supérieur à un côté d'écoulement inférieur, comprime la résine, et mélange ladite résine et ledit agent d'extraction;
un moyen de chauffage pour chauffer ladite résine dans ledit cylindre (7);
un orifice d'alimentation de résine (2) qui fournit ladite résine audit cylindre (7);
un orifice de déchargement de résine (3) qui décharge la résine alimentée à partir dudit orifice d'alimentation de résine (2) et acheminée par ledit arbre à vis (8); et
un orifice d'injection d'agent d'extraction (4) qui est disposé à un côté d'écoulement inférieur dudit orifice d'alimentation de résine (2) dans ladite direction d'acheminement de la résine et un côté d'écoulement supérieur dudit orifice de déchargement de résine (3) et qui injecte ledit agent d'extraction dans ledit cylindre (7);
**caractérisé en ce que**
un orifice de déchargement d'agent d'extraction (5) qui est disposé à un côté d'écoulement inférieur dudit orifice d'alimentation de résine (2) dans ladite direction d'acheminement de la résine et un côté d'écoulement supérieur dudit orifice de déchargement de résine (3), et à un côté d'écoulement supérieur ou inférieur dudit orifice d'injection d'agent d'extraction (4) dans ladite direction d'acheminement de la résine, et qui décharge l'agent d'extraction, à l'extérieur dudit cylindre (7), qui a été mélangé avec la résine incluant ledit retardateur de flamme et dont ledit retardateur de flamme est extrait; et
un mécanisme d'augmentation de pression (10) qui est disposé à un côté d'écoulement inférieur dudit orifice de déchargement d'agent d'extraction (5) dans ladite direction d'acheminement de la résine et un côté d'écoulement supérieur dudit orifice de déchargement de résine (3), et qui augmente une pression dans ledit cylindre (7).

2. Extracteur selon la revendication 1,
dans lequel ledit orifice d'injection d'agent d'extraction (4) a une pluralité d'orifices d'injection d'agent d'extraction pour l'injection dudit agent d'extraction prédéterminé; pourvus à des positions différentes par rapport à ladite direction longitudinale de la surface de paroi dudit cylindre (7), et
ledit orifice de déchargement d'agent d'extraction (5) a une pluralité d'orifices de déchargement d'agent d'extraction pour le déchargement dudit agent d'extraction prédéterminé, pourvus à des positions différentes par rapport à ladite direction longitudinale de la surface de paroi dudit cylindre (7), après ladite pluralité d'orifices d'injection d'agent d'extraction (4) respectifs.

3. Extracteur selon la revendication 2,
dans lequel ledit orifice de déchargement d'agent d'extraction (5) est prévu à un côté d'écoulement inférieur dudit orifice d'injection d'agent d'extraction (4) dans ladite direction d'acheminement de la résine.

4. Extracteur selon la revendication 3,
dans lequel, entre lesdits orifice de déchargement d'agent d'extraction et orifice d'injection d'agent d'extraction, un orifice d'aération (13) est pourvu pour une élimination par évaporation dudit agent d'extraction prédéterminé correspondant.

5. Extracteur selon la revendication 1,
dans lequel ledit orifice d'injection d'agent d'extraction (4) possède un seul ou plusieurs orifices d'injection d'agent d'extraction pour l'injection dudit agent d'extraction prédéterminé, pourvu(s) sur la surface de paroi dudit cylindre (7),
ledit orifice d'injection d'agent d'extraction (5) possède un seul ou plusieurs orifices de déchargement d'agent d'extraction pour le déchargement dudit agent d'extraction prédéterminé, pourvu(s) sur la surface de paroi dudit cylindre (7), et
toute la partie de l'agent d'extraction prédéterminé déchargé à partir dudit orifice de déchargement d'agent d'extraction (5) est injectée de nouveau dans ladite résine thermoplastique à partir dudit orifice d'injection d'agent d'extraction (4) situé à un côté d'écoulement supérieur par rapport à la direction dans laquelle ladite résine thermoplastique est acheminée et comprimée que ledit orifice de déchargement d'agent d'extraction (5).

6. Extracteur selon la revendication 1,
dans lequel ledit orifice de déchargement d'agent d'extraction (5) est disposé à un côté d'écoulement supérieur dudit orifice d'injection d'agent d'extraction (4) dans ladite direction d'acheminement de la résine.

7. Extracteur selon la revendication 1,
dans lequel ledit mécanisme d'augmentation de pression (10) comprend l'un quelconque d'une bague d'étanchéité pourvue sur ledit arbre à vis, un élément à vis inverse ou un disque de malaxage inverse, et une ouverture réduisant partiellement l'aire en coupe dudit cylindre.
